# EUROPÄISCHE PATENTANMELDUNG

(11) **EP 1 775 573 A1**
(43) Veröffentlichungstag der Anmeldung: **18.04.2007**
(21) Anmeldenummer: 05109553.7
(22) Anmeldetag: 13.10.2005
(51) Int. Cl.: G01N 15/14, G06T 7/00, G06F 19/00

(54) **Verfahren zur Detektion von Konturen in biologischen Zellen**

(71) Anmelder: Evotec Technologies GmbH, 40225 Düsseldorf (DE)
(72) Erfinder: Jetzek, Fritz, 22085, Hamburg (DE)
(74) Vertreter: von Kreisler Selting Werner

(57) **Zusammenfassung**

Bei einem Verfahren zur Detektion von Konturen in Bildern biologischer Zellen werden Substrukturen der biologischen Zellen detektiert. Anschließend wird eine Mehrzahl von Landmarken, die der Struktur räumlich zugeordnet sind, detektiert. Zwischen Paaren räumlich benachbarter Landmarken wird sodann ein Liniensegment bestimmt. Die Liniensegmente werden zu einer Kontur zusammengesetzt.

## Beschreibung

Die automatische Segmentierung von Zellen in Mikroskopaufnahmen gehört zu den wichtigsten Aufgaben der Bildanalyse im Bereich der Biologie und pharmazeutischen Forschung.

Zur Bearbeitung biologischer Fragestellungen werden Strukturen von Zellen, z.B. Rezeptoren oder Zytoskelettbestandteile, mit Fluoreszenzfarbstoffen markiert. In Reaktion auf äußere Reize reagieren diese Strukturen dann etwa mit einer Umlagerung. Um solche Beobachtungen quantifizieren zu können, ist es notwendig, einzelne Zellen innerhalb einer Aufnahme zu segmentieren. Für IIochdurchsatzanwendungen liegt das Interesse dabei auf vollständig automatischen Verfahren.

Das Segmentierungsproblem ist komplex, da Zellen eine sehr heterogene Morphologie besitzen, die schwierig zu modellieren ist. Ferner ergeben sich Schwierigkeiten durch Okklusion sowie durch Fälle von zusammmengewachsenen Nachbarzellen, deren verbindende Fläche kaum eindeutig zuzuordnen ist.

Die klassischen Methoden zur Zelldetektion finden sich in der Anwendung von Wachstumsalgorithmen wie den Voronoigraphen oder der Wasserseheidentransformation. Bei diesen fließt insofern biologisches IIintergrundwissen in den Detektionprozeß ein, als daß die tatsächliche Verteilung des Farbstoffs zur Zellmembran hin abnimmt. Die Algorithmen werden typischerweise mit Informationen über die Lage der Zellkerne initialisiert und approximieren dann unter Verwendung der lokalen Intensitätsverteilung im Zytoplasma die Zellkonturen (z.B. Bengtsson, C. Wählby und J. Lindblad: Robust Cell Image Segmentation Methods; in: Pattern Recognition and Image Analysis, Vol. 14, No. 2, 2004, S. 157-167).

Neuere Verfahren erweitern den Ansatz durch die Verwendung von aktiven Konturen (Snakes), die auch bei stark verrauschtem Material noch gute Ergebnisse erzielen (C. D. Rahn und H. S. Stiehl: Semiautomatische Segmentierung individueller Zellen in Laser-Scanning-Microscopy Aufnahmen humaner Haut; in: Bildverarbeitung für die Medizin 2005, Algorithmen -- Systeme-Anwendungen, Springer 2005).

Ein alternativer Ansatz verzichtet ausdrücklich auf eine Modellierung von Zellen; hier setzt man stattdessen auf die pixel- bzw. voxelweise Generierung von Merkmalen, die für Punkte "ahnlicher Zellen ähnliche Werte liefern. Nachfolgendes Clustering von gleichartig klassifizierten Bildelementen führt dann zur Ergebnismenge erkannter Zellobjekte (O. Ronneberger, J. Fehr, II. Burkhardt: Voxel-Wise Gray Seale Invariants for Simultaneous Segmentation and Classification; in: Pattern Recognition, 27th DAGM Symposium, Springer 2005).

Abseits der Bildverarbeitung wurde von Ingber das sogenannte lensegritätsmodell formuliert, bei dem die mechanischen Eigenschaften von Zellen, insbesondere die Natur des Zytoskeletts zum Tragen kommen (D. E. Ingber: Cellular tensegrity defining new rules of biological design that govern the cytoskeleton; in: Journal of Cell Science, 104, S. 613-627, 1993).

Aufgabe der vorliegenden Erfindung ist es ein verlässliches Verfahren zur Detektion von Konturen in Bildern, insbesondere zur Detektion von Zellkonturen bereitzustellen.

Diese Aufgabe wird gelöst durch das Verfahren gemäß Anspruch 1. Die weiteren Ansprüche betreffen bevorzugte Ausführungsformen des erfindungsgemäßen Verfahrens.

Erfitidungsgemäß wird ein Verfahren zur Detektion von Konturen in Bildern biologischen Zellen bereitgestellt, das die folgenden Schritte umfasst:
- Detektieren einer Substruktur einer biologischen Zelle,
- Detektieren einer Mehrzahl von Landmarken, die der Substruktur räumlich zugeordnet sind,
- Bestimmen von Liniensegmenten zwischen Paaren räumlich benachbarter Landmarken, und
- Zusammensetzen der Liniensegmente zu einer Kontur.

In einer bevorzugten Ausführungsform des erfindungsgemäßen Verfahrens wird Vorwissen über das Zellwachstum verwendet, um die Kontur von Zellen zu modellieren. Von Bedeutung sind dabei insbesondere die Bestandteile des Zytoskeletts, namentlich Mikrotubuli, intermediäre Filamente und Mikrofilamente. Es werden Erkenntnisse des Tensegritätsmodells benutzt, um die geometrischen Eigenschaften der Kontur definieren. Den Mittelpunkt der Betrachtung bilden die zu definierenden Wachstumsachsen der Zelle, die sich auf der Kontur als Krümmungsextrema wieder finden. Insbesondere können die zwischen diesen Punkten liegenden Abschnitte durch konkave Kurven zweiter Ordnung dargestellt werden. Der Ansatz birgt damit die Möglichkeit, Zellkonturen im Subpixelbereich zu ermitteln.

Diese Methodik ist besonders eng an der biologischen Wirklichkeit orientiert, so dass hier die Grundlage für wesentlich robustere Segmentierungsverfahren gebildet wird. Das Problem der Segmentierung wird reduziert auf die Erkennung von Landmarken, die mit den Endpunkten von Wachstumsachsen korrespondieren.

Schwerpunkt der Anwendung des erfindungsgemäßen Verfahrens ist insbesondere die Beschreibung von Zellkonturen. Physikalische Modelle wie den Beziet-Splines finden bevorzugt Anwendung, um die kontinuierliche Konkavität von Konturabschnitten bezüglich des Zellkerns zu erklären. Dabei können die Wachstumsachsen direkt als Parametrisierung der Splines eingesetzt werden.

Desweiteren ist es bevorzugt, den Zusammenhang der lokalen Häufung von Wachstumsachsen mit der Gestalt, der dazwischen liegenden Konturabschnitte zu berücksichtigen.

Der beschriebene Ansatz wurde am Beispiel adhärenten Zellgewebes erprobt Liegen die Landmarken einmal vor, kann durch ein Modell der abschnittsweisen Approximation mittels Bezier-Splines ein akzeptables Ergebnis erzielt werden. Dies gilt insbesondere für weit auseinander liegende Landmarken, die in weiträumig aufgespannte Kontursegmente resultieren.

Viel versprechende Resultate ergeben sich aber auch in diffusen Bereichen des Zytoplasmas, die insgesamt sogar konvex erscheinen. Hier lässt sich zeigen, dass eine engere Bündelung der Achsen und eine einhergehende Verflachung der Splines ebenfalls eine erfolgreiche Abgrenzung der Zelle gegen ihre Umgebung bewirkt.

Insgesamt wird deutlich, dass durch den Schwerpunkt auf biologischen Gegebenheiten eine bessere Erkennung möglich wird, als sie durch Betrachtung der Intensitätsvertcilung allein überhaupt denkbar wäre.

Der erfindungsgemäße Ansatz ist nicht-modellierenden Verfahren durch die intensive Einbeziehung physikalisch-biologischer Erkenntnisse bezüglich des Zellwachstums überlegen. Trotz der heterogenen Morphologie von Zellen existieren aussagekräftige generelle Eigenschaften, die für eine Segmentierung unbedingt einbezogen werden müssen.

Die bekannten Eigenschaften des Zytoskeletts gelten in vergleichbarer Form auch für Zellen, bei denen nicht von ausgeprägten Wachstumsachsen gesprochen werden kann. So lässt sich der erfindungsgemäße Ansatz auf Zellen in untersehiedlichen Umgebungen ausdehnen, z.B. auf enge Epithelzellgewebe. In Frage kommt dabei auch die Hinzunahme weiterer Constraints, etwa die Relation von der Orientierung des Zellnukleus im Verhältnis zu der Orientierung der gesamten Zelle.

Das erfindungsgsgemäße Verfahren ist insbesondere im Rahmen der automatisierten Bildverarbeitung anwendbar, vorzugsweise durch automatisches Erkennen von Landmarken und ihrer Zuordnung zu Zellen

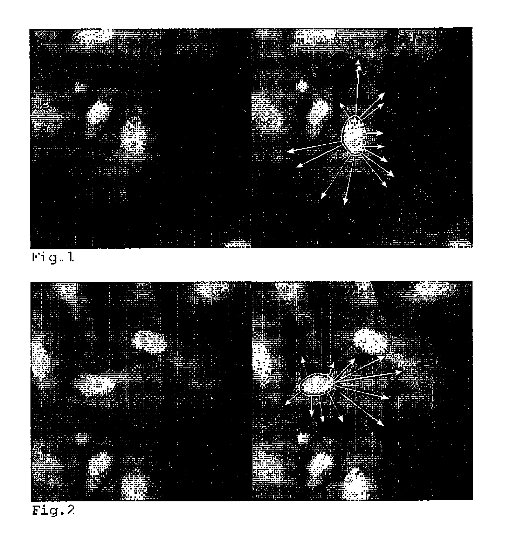

Abbildungen 1 und 2 veranschaulichen die manuelle Gewinnung von Landmarken in Aufnahmen von Zellgewebe. Die beiden linken Bilder zeigen jeweils eine Zelle, deren Kern nahe der Bildmitte liegt. Die Erkennung des Kerns ist mit herkömmlichen Methoden der Bildanalyse einfach zu bewerkstelligen. Als Landmarken werden Krümmungsextrema auf der Zellmembran identifiziert. Die Wachstumsachsen (jeweils rechtes Bild) werden nun als Verbindungen einer solchen Marke mit dem am nächsten liegenden Punkt auf der Umrandung des Zellkerns definiert.

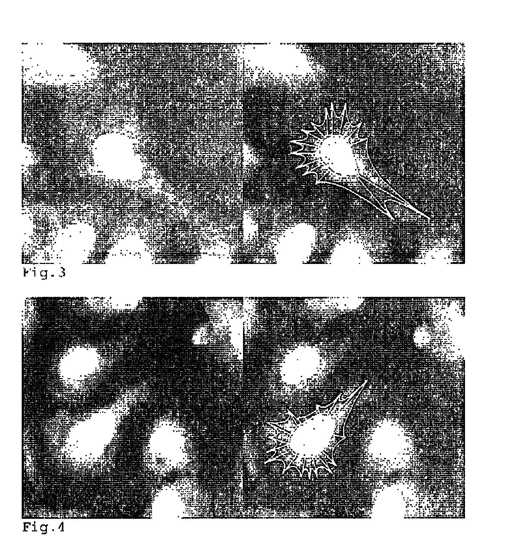

Abbildungen 3 und 4 zeigen wiederum Kernumrandung und Wachstumsachsen (jeweils rechtes Bild) sowie Bezier-Splines, deren Lage direkt durch die Achsen bestimmt wird.
Nicht gezeigt sind Splines, bei denen die lokale Häufung von Achsen eine Verflachung der lokalen Konturahschnitte bewirkt; die übermäßig sternförmige Struktur insbesondere bei Konturen in großer Nähe zum Kern soll dadurch vermieden werden.

## Patentansprüche

1. Verfahren zur Detektion von Konturen in Bildern biologischer Zellen, das die folgenden Schritte umfasst:
- Delektieren einer Substruktur einer biologischen Zelle,
- Detektieren einer Mehrzahl von Landmarken, die der Substruktur räumlich zugeordnet sind,
- Bestimmen von Liniensegmenten zwischen Paaren räumlich benachbarter Landmarken, und
- Zusammensetzen der Liniensegmente zu einer Kontur.

2. Verfahren nach Anspruch 1, **dadurch gekennzeichnet, dass** die Substruktur der biologischen Zelle der Zellkern ist.

3. Verfahren nach Anspruch 1 oder 2, **dadurch gekennzeichnet, dass** die Landmarken äußere Begrenzungspunkte des Zytoskeletts darstellen.

4. Verfahren nach einem der Ansprüche 1 bis 3, **dadurch gekennzeichnet, dass** als Liniensegmente Polynome oder Splines, insbesondere Bezier-Splines, verwendet werden.

5. Verfahren nach Anspruch 4, **dadurch gekennzeichnet, dass** die Liniensegmente konkave Kurven zweiter Ordnung darstellen.

6. Verfahren nach einem der Ansprüche 1 bis 5, **dadurch gekennzeichnet, dass** als Kontur die die Zelle begrenzende Zellmembran detektiert wird.

7. Verfahren nach einem der Ansprüche 1 bis 6, **dadurch gekennzeichnet, dass** Konturen in einem Bild eines biologischen Gewebes, insbesondere eines Gewebeschnittes oder einer konfluenten Zelllage, bestimmt werden.

8. Verfahren nach einem der Ansprüche 1 bis 6, **dadurch gekennzeichnet, dass** Konturen in einem Bild einer oder mehrerer sich in Suspension befindlichen Zellen bestimmt werden.

9. Verfahren nach einem der Ansprüche 1 bis 6, **dadurch gekennzeichnet, dass** Konturen in einem Bild einer oder mehrerer sedimentierter oder adhärenter Zellen bestimmt werden.

10. Verfahren nach einem der Ansprüche 1 bis 9, **dadurch gekennzeichnet, dass** Informationen über die Lage und/oder Ausrichtung der Substruktur bei der Detektion der Landmarken und/oder der Bestimmung der Liniensegmente berücksichtigt werden.

11. Verfahren nach einem der Ansprüche 1 bis 10, **dadurch gekennzeichnet, dass** Informationen über die räumliche Dichte der Landmarken bei der Bestimmung der Liniensegmente berücksichtigt werden.

12. Verfahren nach einem der Ansprüche 1 bis 11, **dadurch gekennzeichnet dass** eine hohe räumliche Dichte von Landmarken derart berücksichtigt wird, dass flache Liniensegmente entstehen.
